# EUROPEAN PATENT SPECIFICATION

(11) **EP 3 006 144 B1**
(45) Date of publication and mention of the grant of the patent: **17.09.2025**
(21) Application number: 14803350.9
(22) Date of filing: 28.05.2014
(51) Int. Cl.: B23B 45/02, H01M 50/247, H01M 50/262

(54) **BATTERY-TYPE DRILLING MACHINE**
BATTERIEARTIGE BOHRMASCHINE
PERCEUSE DU TYPE À BATTERIE

(30) Priority: 30.05.2013 JP 2013113597
(43) Date of publication of application: 13.04.2016
(73) Proprietor: Nitto Kohki Co., Ltd., Tokyo 146-8555 (JP)
(72) Inventor: OHTSUKA, Kenji, Tokyo 146-8555 (JP); YOKOYAMA, Toshiki, Tokyo 146-8555 (JP)
(74) Representative: Wagner & Geyer
(86) International application number: PCT/JP2014/064061
(87) International publication number: WO 2014/192785

(56) References cited:
- EP-A1- 3 006 145
- JP-A- 2005 074 559
- JP-A- 2011 136 407
- JP-A- H0 230 410
- JP-A- H09 239 677
- JP-A- H09 312 938
- JP-A- H09 314 409
- JP-A- H1 128 605
- US-A1- 2009 028 653
- US-A1- 2009 028 653

## Description

### Technical Field:

The present invention relates to a portable drilling machine driven by a battery.

### Background Art:

A portable drilling machine has a body frame, a drilling drive unit having a motor for rotationally driving a drilling tool, e.g. a drill, and attached to the body frame vertically movably, and a securing unit provided underneath the body frame to removably and securely hold the drilling machine to a workpiece, as disclosed, for example, in JP H7-35 698.

Recently, the use has been made of a battery as a power source to drive a drilling tool in order to further improve the portability of drilling machines of the type described above, as disclosed, for example, in US 2009 028 653 A, which discloses a battery-operated drilling machine according to the preamble of claim 1.
A battery used in a battery-operated drilling machine is, usually, removably loaded in the body frame so that the battery can be replaced with another. In this regard, if the battery is removed suddenly during driving of the drilling machine, the drive of the machine is suddenly stopped, which may cause an unexpected accident. Taking as an example a drilling machine in which the securing unit is driven by the electric power of the battery, removal of the battery results in cancellation of the secure holding of the drilling machine by the securing unit. This may cause the drilling machine to fall down or drop. Therefore, it is necessary to configure the drilling machine so that the battery cannot be removed accidentally.

### Summary of Invention:

### Technical Problem:

Accordingly, an object of the present invention is to provide a drilling machine using a battery and configured to indicate a warning sign to the operator before removal of the battery occurs, thereby preventing accidental removal of the battery.

### Solution to Problem:

The present invention provides a battery-operated drilling machine as set forth in claim 1. Further embodiments are inter alia disclosed in the dependent claims.

The battery-operated drilling machine inter alia includes: a drilling drive unit having a motor for rotationally driving a drilling tool; a drilling machine body unit having a battery loading part into which is loaded a battery for supplying electric power to the motor, the drilling machine body unit supporting the drilling drive unit vertically movably to bring the drilling tool toward and away from a workpiece; a battery locking member attached to the drilling machine body unit, the battery locking member being movable between a retracted position and an advanced position relative to the battery loaded in the battery loading part, the battery locking member being configured to prevent removal of the battery from the battery loading part when the battery locking member is in the advanced position; a position detecting device provided in the drilling machine body unit to detect a position of the battery locking member; and a status indicator for indicating a status of the drilling machine. In the drilling machine, when the position detecting device detects a state in which the battery locking member is not in the advanced position when the battery is loaded in the battery loading part, the status indicator indicates a warning sign that indicates the state.

In the drilling machine, the status indicator indicates a warning sign when a state is detected in which removal of the battery from the battery loading part may occur, i.e. when a state is detected in which the battery locking member is not in the advanced position. Accordingly, before accidental removal of the battery occurs, the operator is warned and prompted to ensure that removal of the battery will not occur. Thus, it is possible to prevent the battery from being accidentally removed or unintentionally dislodged and hence possible to use the drilling machine even more safely. It should be noted that the terms "vertical", "upward, and "downward" as stated in the specification and the claims of this application are used to facilitate the understanding of the relative positional relationship between constituent elements of the drilling machine according to the present invention, and that the terms should not be construed as meaning vertical directions in absolute space.

The drilling machine includes an electromagnet attached to the drilling machine body unit to securely hold the drilling machine body unit to the workpiece. The status indicator is configured to indicate the warning sign when the above-described state is detected by the position detecting device while the electromagnet is being driven.

When the battery-operated drilling machine has an electrically driven securing unit, such as an electromagnet-type securing unit, to securely hold the drilling machine body unit, the securing unit becomes unable to securely hold the drilling machine body unit if the battery supplying electric power is removed and the supply of electric power is cut off. On such an occasion, the drilling machine may fall down or drop. Therefore, it is important to hold the battery so that the supply of electric power to the electromagnet is not cut off, particularly, when the electromagnet is being driven. In the drilling machine, a warning sign is indicated when the position detecting device detects a state in which the battery locking member is not in the advanced position while the electromagnet is being driven. Accordingly, it is possible to warn the operator before the drive of the electromagnet is stopped suddenly due to removal of the battery, and to prompt the operator to ensure that removal of the battery will not occur. Thus, it is possible to prevent an accident such as a fall of the drilling machine.

The drilling machine further includes a drive control circuit controlling drive of the motor. The drive control circuit may be configured not to start the motor when the status indicator is indicating the warning sign.

More preferably, the drive control circuit may be configured to stop the motor when the status indicator indicates the warning sign while the motor is being driven.

When the status indicator is indicating the warning sign, i.e. when the battery locking member is not in the advanced position, there is a possibility that the battery will be dislodged and the supply of electric power to the motor will be cut off. If the battery is dislodged and the motor is stopped suddenly during drilling, a problem may occur that the drilling tool stops drilling in the state of biting into the workpiece and becomes incapable of being removed from the workpiece, for example. In a case where the drilling machine body unit is securely held by the electromagnet as stated above, if removal of the battery occurs suddenly during drilling, the securely holding power of the electromagnet disappears. Consequently, the drilling machine may be swung by external force acting on the drilling tool performing drilling at that time, which may cause the drilling machine to fall down. In the drilling machine of the present invention, the motor cannot be driven when there is a possibility of removal of the battery; therefore, it is possible to prevent drilling from taking place in a dangerous situation as stated above.

The position detecting device is a limit switch. The limit switch may be configured to be turned on/off when the battery locking member moves between the retracted position and the advanced position, thereby detecting a position of the battery locking member.

Specifically, the status indicator may have a light-emitting element, so that the warning is visually indicated by a change in color or in lighting condition of the light-emitting element.

At a worksite where drilling is performed, other machining operations may often be performed around the drilling machine, which may cause large noise. Therefore, a warning by sound is not readily noticeable to the operator. In this regard, the drilling machine according to the present invention is configured to indicate a visual warning and therefore can inform the operator of the status of the drilling machine accurately even at a noisy worksite.

An embodiment of the drilling machine according to the present invention will be explained below on the basis of the accompanying drawings.

### Brief Description of Drawings:

Fig. 1 is a perspective view of a drilling machine according to an embodiment of the present invention as seen from the left front side of the drilling machine.
Fig. 2 is a perspective view of the drilling machine shown in Fig. 1, as seen from the right front side of the drilling machine.
Fig. 3 is a partially sectioned view of the drilling machine shown in Fig. 1.
Fig. 4 is an exploded view of a body unit of the drilling machine.
Fig. 5 is a rear perspective view of the drilling machine shown in Fig. 1, with a battery removed therefrom.
Fig. 6 is a perspective view of the drilling machine shown in Fig. 1, with a drilling drive unit separated from the drilling machine body unit.
Fig. 7 is a perspective view of the drilling drive unit shown in Fig. 6, as seen from a different angle from that of Fig. 6.
Fig. 8 is a perspective view showing the front side of a battery.
Fig. 9 is a top perspective view of the drilling machine shown in Fig. 1 when a battery locking member is in a retracted position.
Fig. 10 is a top perspective view of the drilling machine shown in Fig. 1 when the battery locking member is in an advanced position.
Fig. 11 is a circuit block diagram showing a drive control circuit.
Fig. 12 is a perspective view showing a left-side part of a battery housing.

### Description of Embodiments:

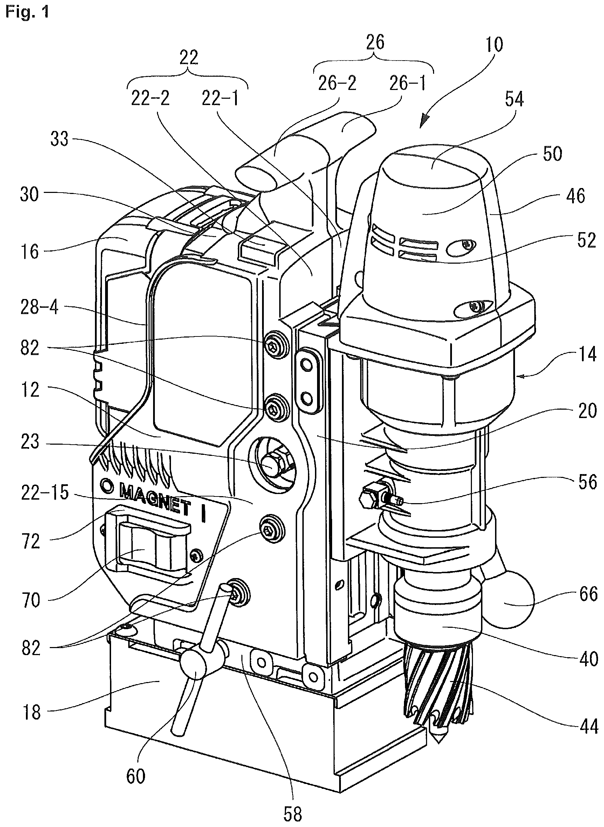

As shown in Figs. 1 to 5, a drilling machine 10 according to an embodiment of the present invention is a battery-operated portable drilling machine including a drilling drive unit 14 having a motor 48 for rotationally driving a drilling tool (cylindrical cutter in the illustrated example) 44 and a drilling machine body unit 12 having a battery loading part 28 into which is loaded a battery 16 for supplying electric power to the motor 48, the drilling machine body unit 12 supporting the drilling drive unit 14 vertically movably to bring the drilling tool 44 toward and away from a workpiece. The drilling machine 10 is secured to a predetermined drilling operation position of a workpiece by an electromagnet-type securing unit 18 attached to the bottom of the drilling machine body unit 12. In this state, the drilling tool 44 attached to the lower end of the drilling drive unit 14 is driven to rotate by the motor 48, and a feed handle 66 attached to the drilling machine body unit 12 is turned, thereby moving the drilling drive unit 14 downward relative to the drilling machine body unit 12 through a gear device comprising a rack 64 and a pinion 65, and thus drilling the workpiece with the drilling tool 44.

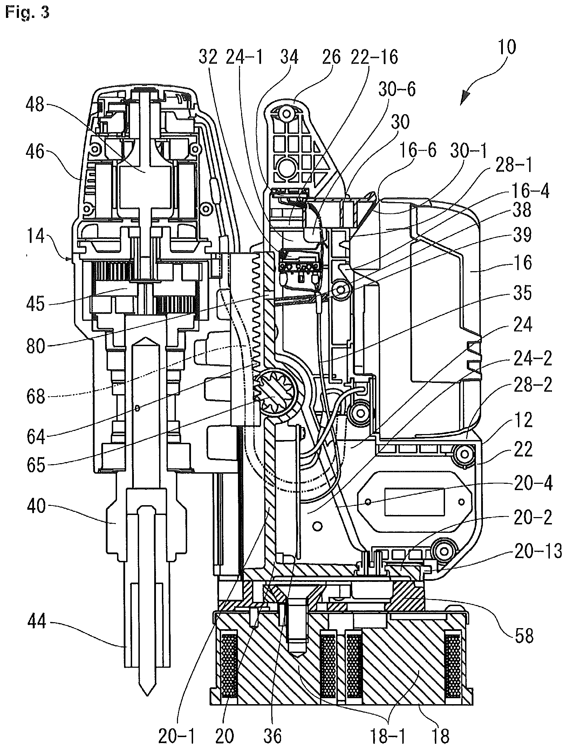

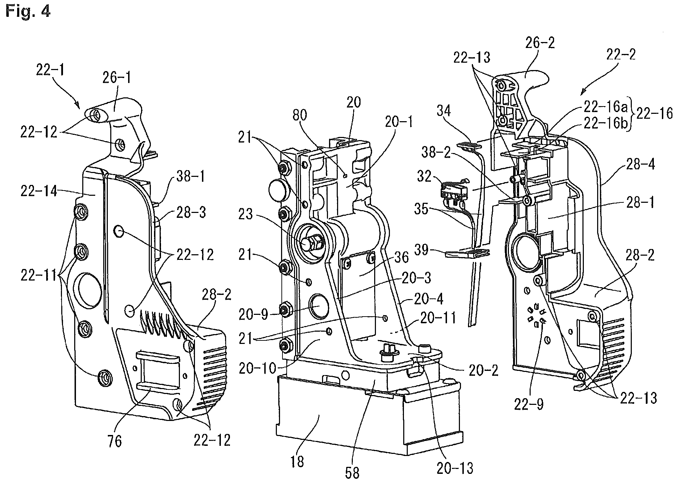

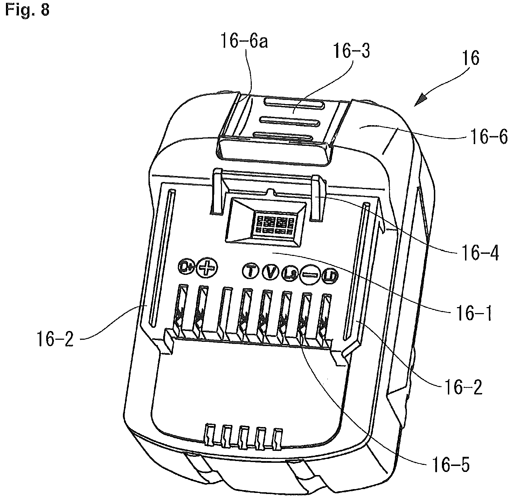

The drilling machine body unit 12 has, as shown in Figs. 3 and 4, a frame 20 supporting the drilling drive unit 14 movably in a vertical direction, and a battery housing 22 attached to the frame 20. More specifically, the frame 20 is formed in an L-shape by a front wall portion 20-1 to which the drilling drive unit 14 is attached, and a lower wall portion 20-2 to which an electromagnet-type securing unit 18 is attached. The battery housing 22, which is attached to the L-shaped frame 20, is configured to constitute a battery loading part 28 in an upper rear part thereof to removably hold a battery 16 therein. The frame 20 needs to have sufficient strength to support the drilling drive unit 14, which is subjected to a large load during a drilling operation, and to also support the electromagnet-type securing unit 18. In this embodiment, the frame 20 is made of aluminum to ensure the necessary and sufficient strength. On the other hand, the battery housing 22 is mainly for supporting the battery 16 and therefore made of a resin material to achieve a reduction in the overall weight of the drilling machine. In addition, because the battery housing 22 is made of a resin material, no short circuit occurs even if any of female connector terminals 16-5 (Fig. 8) of the battery 16 contacts the battery housing 22. It should be noted that the term "L-shaped frame" as used herein means that the structure of the frame 20 contains an L-shaped portion. That is, the term "L-shaped frame" means to include any frame structure containing an L-shaped portion even if the overall configuration is not an L-shape, e.g. a frame structure in which a part of the lower wall portion 20-2 extends forward beyond the front wall portion 20-1.

The battery housing 22 comprises a right-side part 22-1 and a left-side part 22-2, which are defined by splitting the battery housing 22 at the center thereof. The right-side part 22-1 and the left-side part 22-2 are attached to the frame 20 in such a manner as to sandwich the frame 20 therebetween from the right and left sides. When the battery housing 22 is attached to the frame 20, an interior space 24 (Fig. 3) is formed between the battery housing 22 and the frame 20. In the interior space 24, a drive control circuit 36 is attached to the rear surface of the front wall portion 20-1 in parallel thereto at a position between right- and left-side ribs 20-3 and 20-4 (Fig. 4). The drive control circuit 36 controls electric power supplied from the battery 16 to the motor 48 of the drilling drive unit 14 and to an electromagnet 18-1 in the electromagnet-type securing unit 18.

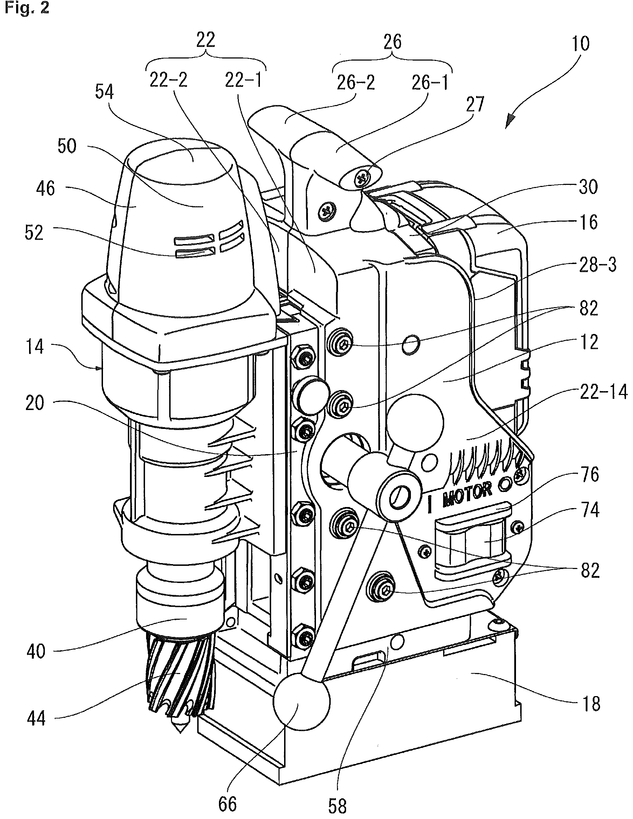

The battery housing 22 is formed with engagement projecting portions 22-9 to be engaged with circular engagement recesses 20-9, respectively, formed on the right- and left-side ribs 20-3 and 20-4 of the frame 20. Each engagement projecting portion 22-9 comprises 6 projections arranged in a circle. This structure strengthens the engagement between the battery housing 22 and the frame 20. The battery housing 22 is secured to the frame 20 with screws 82 (Fig. 1) inserted through screw insertion holes 22-11, respectively, provided in each of a right side 22-14 (Fig. 2) and left side 22-15 (Fig. 1) of the battery housing 22, and engaged with 4 threaded holes 21, respectively, provided in each of the right and left sides 20-10 and 20-11 of the frame 20. Further, elongated screws (not shown) are inserted through 6 screw insertion holes 22-12 (Fig. 4), respectively, provided in the right-side part 22-1, and engaged with 6 threaded holes 22-13 (Fig. 4), respectively, provided in the left-side part 22-2, thereby connecting and securing the right-side part 22-1 and the left-side part 22-2 directly to each other. Thus, the battery housing 22 is secured to the frame 20 at a large number of points; therefore, stress concentration is less likely to occur even when a large force is applied to the battery housing 22, and the danger of breakage of the battery housing 22 is reduced.

The top of the battery housing 22 is provided with a grip 26. The grip 26 comprises, as shown in Fig. 4, a right-side grip portion 26-1 formed on the right-side part 22-1 of the battery housing 22 and a left-side grip portion 26-2 formed on the left-side part 22-2 of the battery housing 22. The right-side grip portion 26-1 and the left-side grip portion 26-2 form a grip 26 (Fig. 1) when the right-side part 22-1 and the left-side part 22-2 are attached to the frame 20. The right-side grip portion 26-1 and the left-side grip portion 26-2 are connected and secured to each other by an elongated screw 27 (Fig. 2) extending from the right-side grip portion 26-1 to the left-side grip portion 26-2. The screw 27 functions also as a reinforcing member to increase the strength of the grip 26.

As shown in Fig. 3, a drilling drive unit 14 is attached to the front side of the front wall portion 20-1 of the frame 20. The drilling drive unit 14 has a drilling tool 44, such as a drill or a cylindrical cutter, held at the lower side of the drilling drive unit 14 by being fitted to an arbor 40. The arbor 40 is connected through a speed reducer 45 in the drilling drive unit 14 to a motor 48 provided in a motor cover 46 of the drilling drive unit 14. The drilling tool 44 is driven to rotate by driving the motor 48. As shown in Fig. 1 and other figures, the motor cover 46 has a plurality of vent holes 52 provided in side surfaces 50 thereof to cool the motor 48 by air flowing into the motor cover 46 through the vent holes 52. The reason why the vent holes 52 are provided not in a top surface 54 but in the side surfaces 50 is to prevent, as much as possible, water or foreign objects, such as machining swarf and dust, from entering the inside of the motor cover 46. The left side of the drilling drive unit 14 is provided with a plug 56 serving as a cutting fluid filler port. The plug 56 is fitted with a connection socket attached to the distal end of a hose extending from a cutting fluid supply tank (not shown) to supply a cutting fluid to the drilling tool 44 during drilling.

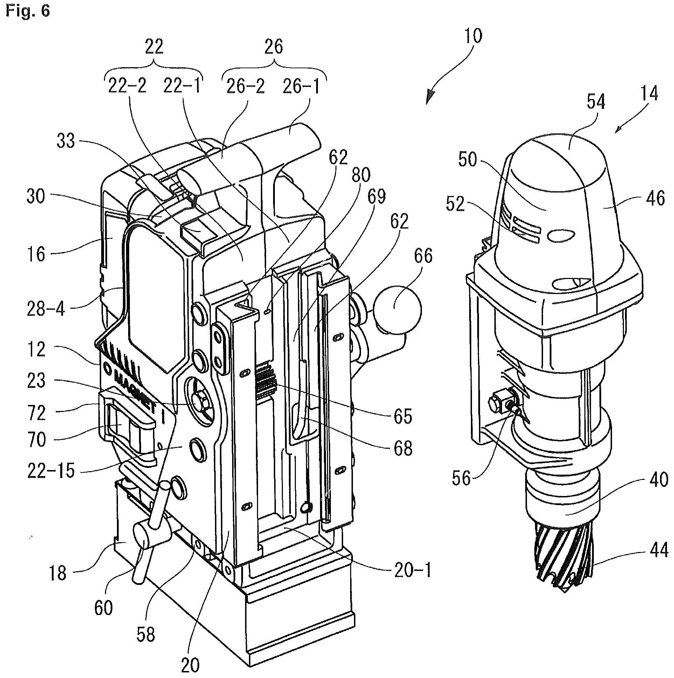

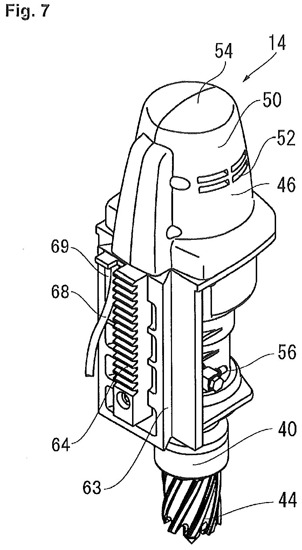

As shown in Fig. 6, the front side of the front wall portion 20-1 of the frame 20 has vertically extending dovetail grooves 62 formed on the right and left sides thereof. On the other hand, the drilling drive unit 14 is, as shown in Fig. 7, provided with a generally plate-shaped slider 63 having right- and left-side edges shaped to correspond to the dovetail grooves 62. The slider 63 has a vertically extending rack 64 (Fig. 7) provided in the center of the rear side thereof, and the frame 20 is provided with a pinion 65 (Fig. 6) to be engaged with the rack 64. The pinion 65 is rotated by manually rotating a feed handle 66 removably attached to an end of the shaft 23 projecting from the right side 20-10 (Fig. 2) of the frame 20, thereby vertically moving the drilling drive unit 14 relative to the frame 20. The feed handle 66 can also be attached to an end of the shaft 23 projecting from the left side 20-11 of the frame 20. Thus, the feed handle 66 can be attached to either of the right and left sides of the frame 20 according to each particular situation. It should be noted that the terms "right" and "left" as used in this specification mean directions relative to the drilling machine 10 as seen from the front side thereof.

Wiring 68 extending from the motor 48 of the drilling drive unit 14 passes through a wiring insertion passage 69 (Figs. 6 and 7) formed between one dovetail groove 62 and the slider 63 and, as shown in Fig. 3, leads into the interior space 24 of the drilling machine body unit 12, in which the wiring 68 is connected to the drive control circuit 36. Thus, almost no part of the wiring 68 is exposed to the outside. The structure in which the wiring 68 is not exposed to the outside prevents the wiring 68 from being disconnected, for example, by application of an excessively large force thereto which might otherwise occur when the wiring 68 is caught on something.

The electromagnet-type securing unit 18 attached to the lower side of the drilling machine body unit 12 is configured such that, when electric power from the battery 16 is supplied to the electromagnet 18-1 therein, the electromagnet-type securing unit 18 generates a magnetic field and thus magnetically adheres to a workpiece made of a magnetic material, e.g. iron, thereby securely holding the drilling machine 10 to the workpiece. A position adjusting mechanism 58 is provided between the electromagnet-type securing unit 18 and the frame 20 to allow the position of the drilling machine body unit 12 to be adjusted both the front-back direction and the lateral direction relative to the electromagnet-type securing unit 18 by turning a position adjusting handle 60 removably attached to the position adjusting mechanism 58, thereby enabling the drilling position of the workpiece to be finely adjusted. It should be noted that the position adjusting handle 60 can also be attached to the right side of the position adjusting mechanism 58.

As shown in Fig. 1, the left side 22-15 of the battery housing 22 is provided with an electromagnet switch 70 for activating the electromagnet-type securing unit 18. A wall 72 is provided around the electromagnet switch 70 to prevent the electromagnet switch 70 from being easily carelessly actuated. The electromagnet switch 70 is configured to be turned off by pressing the rear (left as seen in Fig. 1) end portion thereof. The wall 72 is raised in height at its rear end portion so that the electromagnet switch 70 is not easily accidentally turned, particularly from on to off. Further, as shown in Fig. 2, the right side 22-14 of the battery housing 22 is provided with a motor switch 74 for starting the motor 48. A wall 76 is also provided around the motor switch 74 to prevent the motor switch 74 from being easily carelessly actuated. Thus, the electromagnet switch 70 and the motor switch 74 are disposed on the different lateral sides 22-15 and 22-14, respectively, of the battery housing 22. With this structure, it is easy to ensure the areas for placing the switches. In addition, because interference between wiring lines is reduced in the interior space 24, it is possible to design the battery housing 22 to be smaller in size. Further, it is possible to prevent, as much as possible, the electromagnet switch 70 and the motor switch 74 from being actuated mistakenly from each other.

As shown in Fig. 3, a limit switch 32 (detailed later) and an LED indicator circuit 34 are disposed in an upper part of the interior space 24 of the battery housing 22. The battery housing 22 is provided with a partition plate 38 that divides the drive control circuit 36 from the LED indicator circuit 34 and the limit switch 32. The partition plate 38 separates a lower interior space 24-2, in which the drive control circuit 36 is disposed, from an upper interior space 24-1, in which the LED indicator circuit 34 and the limit switch 32 are disposed. The partition plate 38 is provided so as to slope downward from the rear toward the front. In addition, a drain port 80 (Fig. 3) is provided in a part of the front wall portion 20-1 of the frame 20 that is located in the upper interior space 24-1. The upper interior space 24-1 is not sealed from the outside because the upper interior space 24-1 slidably receives a battery locking member 30, which projects to the outside of the battery housing 22. Therefore, there is a possibility that water, e.g. rainwater, may enter the upper interior space 24-1 from the outside. However, the above-described structure having the sloped partition plate 38 and the drain port 80 makes it possible to discharge water entering the upper interior space 24-1 to the outside from the drain port 80 without allowing the water to enter the lower interior space 24-2, in which the drive control circuit 36 is located. Consequently, it is possible to prevent the drive control circuit 36 from being wet with water, which would otherwise cause a failure. It should be noted that, in this embodiment, the partition plate 38 comprises, as shown in Fig. 4, a right-side partition plate 38-1 provided in the right-side part 22-1 of the battery housing 22 and a left-side partition plate 38-2 provided in the left-side part 22-2 of the battery housing 22. The right-side partition plate 38-1 and the left-side partition plate 38-2 face each other in such a manner as to form an opening therebetween, and the wiring 35 connected to the LED indicator circuit 34 and the limit switch 32 is vertically passed through the opening. A seal member 39 is provided around the wiring 35 in the opening to seal between the upper interior space 24-1 and the lower interior space 24-2.

The upper surface of the lower wall portion 20-2 of the frame 20 slopes downward from the front toward the rear, so that if water should enter the lower interior space 24-2, the water is discharged to the outside from a drain groove 20-13 provided at the rear end of the lower wall portion 20-2.

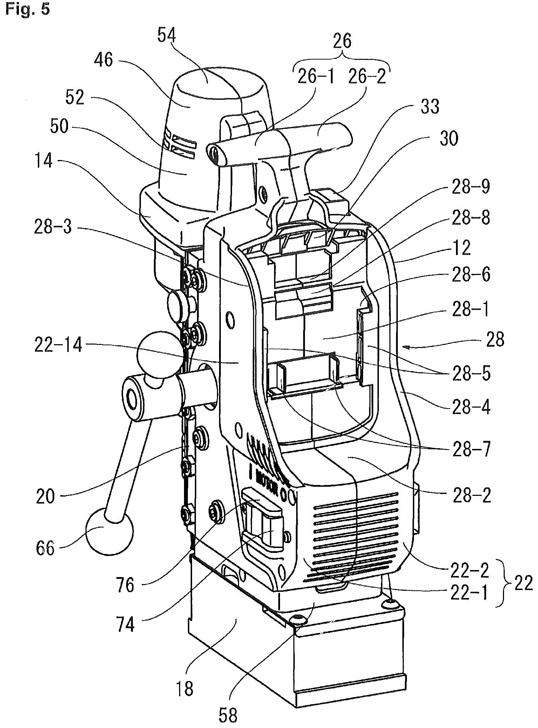

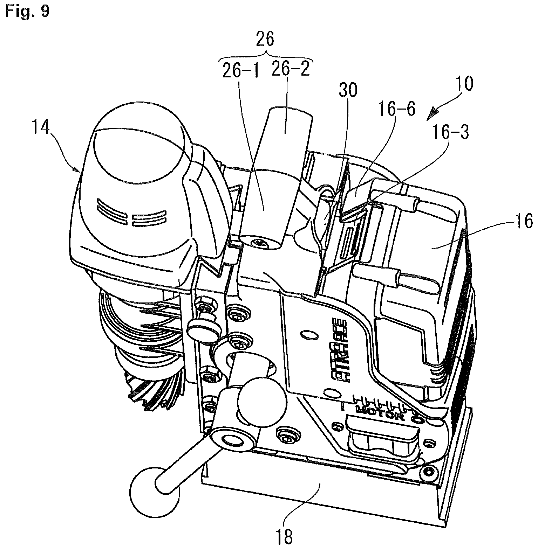

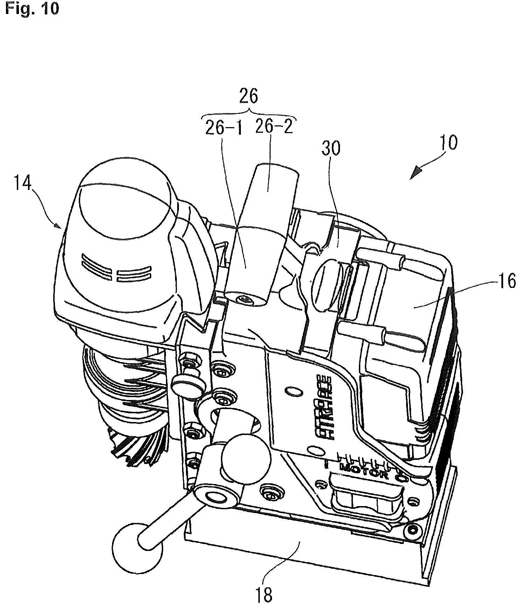

As shown in Fig. 5, the battery housing 22 of the drilling machine body unit 12 is formed with a battery accommodating space (battery loading part) 28 for receiving and loading a battery 16 at the rear upper part thereof. That is, the battery housing 22 is formed with a right-side wall portion 28-3, a left-side wall portion 28-4, an intermediate wall portion 28-1 extending between the right- and left-side wall portions 28-3 and 28-4 apart from and parallel to the front wall portion 20-1 of the frame 20 at the rear of the front wall portion 20-1, and a bottom wall portion 28-2 extending rearward from the lower end edge of the intermediate wall portion 28-1 between the right- and left-side wall portions 28-3 and 28-4. The battery accommodating space 28 is defined by the right- and left-side wall portions 28-3 and 28-4, the intermediate wall portion 28-1 and the bottom wall portion 28-2 in such a way that the battery accommodating space 28 is open at the upper and rear sides thereof. The battery accommodating space 28 is provided with battery guides 28-5 extending vertically at right- and left-side positions, respectively, slightly rearward of the intermediate wall portion 28-1. Guide grooves 28-6 are formed between the battery guides 28-5 and the intermediate wall portion 28-1. The guide grooves 28-6 are slidingly engaged with guide rails 16-2 (Fig. 8), respectively, of the battery 16, which are provided to extend vertically on a front side 16-1 of the battery 16, thereby allowing the battery 16 to be guided vertically. The intermediate wall portion 28-1 further has male connector terminals 28-7 disposed at a lower position thereof, and a battery locking recess 28-8 disposed at an upper position thereof. On the other hand, the front side 16-1 of the battery 16 is, as shown in Fig. 8, provided with female connector terminals 16-5 and a battery locking portion 16-4 that is displaceable in the front-back direction and urged forward by a spring member (not shown). When the battery 16 is loaded into the battery accommodating space 28 along the battery guides 28-5, the female connector terminals 16-5 engage the male connector terminals 28-7 to make the battery 16 and the drive control circuit 36 electrically connected to each other. At the same time, the battery locking portion 16-4 is fitted into the battery locking recess 28-8 to hold the battery 16 from moving vertically from the loaded position. The battery locking portion 16-4 has a sloped lower surface. When the battery 16 is slid downward along the battery guides 28-5, the sloped lower surface of the battery locking portion 16-4 is pushed by an upper wall portion 28-9 of the battery locking recess 28-8, causing the battery locking portion 16-4 to retract. After the sloped lower surface of the battery locking portion 16-4 has passed over the upper wall portion 28-9 to the lower side of the latter, the battery locking portion 16-4 is pushed out forward by the spring urging force to fit into the battery locking recess 28-8. Further, in this embodiment, the battery locking portion 16-4 extends upward in the battery 16 to an inclined surface 16-3 exposed through an opening 16-6a in the widthwise center of an inclined battery holding member engagement surface 16-6 (described later) formed on the top front side of the battery 16. The inclined surface 16-3 is substantially flush with the battery holding member engagement surface 16-6. When the battery 16 is to be unloaded from the battery accommodating space 28, the inclined surface 16-3 is pushed to displace the battery locking portion 16-4 rearward. The battery housing 22 has a battery locking member accommodating part 22-16 (Figs. 3 and 4) formed at the top of the intermediate wall portion 28-1 to extend in the front and back direction and to open rearward. The battery locking member accommodating part 22-16 comprises a top portion 22-16a and a bottom portion 22-16b. The battery locking member accommodating part 22-16 accommodates the battery locking member 30. The battery locking member 30 is slidable in the front and back direction in the battery locking member accommodating part 22-16 between a retracted position (Figs. 5 and 9) where the battery locking member 30 is retracted relative to the battery 16 and an advanced position (Fig. 10) where the battery locking member 30 is advanced relative to the battery 16. The battery locking member 30 has an inclined surface 30-1 on a side thereof facing the battery 16. When the battery locking member 30 is in the advanced position shown in Fig. 10, the inclined surface 30-1 abuts against the inclined battery holding member engagement surface 16-6 (Figs. 8 and 9) formed on the top front side of the battery 16, thereby holding the battery in the battery accommodating space 28.

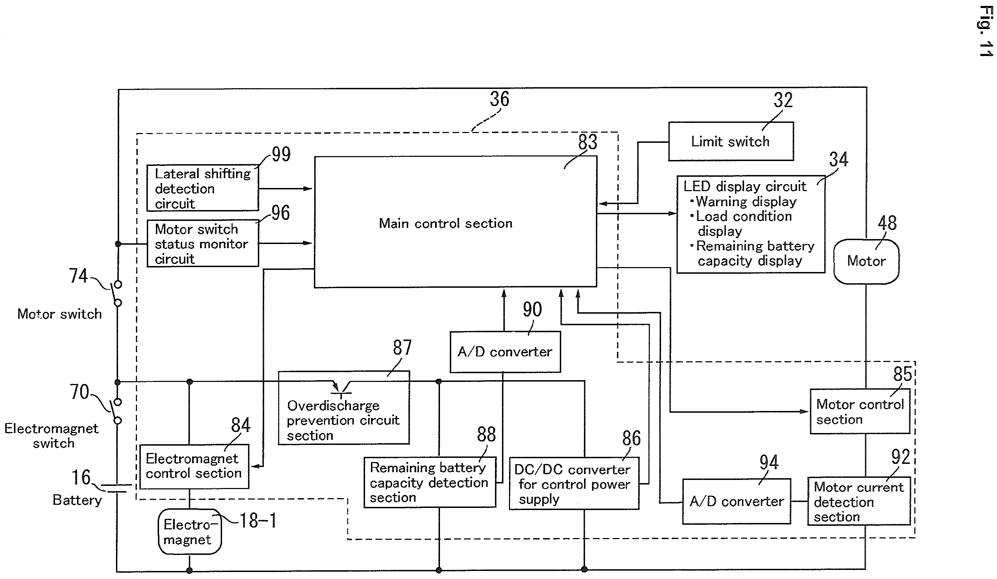

The drive control circuit 36 is provided in the drilling machine body unit 12 to control mainly the drive of the motor 48 and the electromagnet-type securing unit 18. As shown in Fig. 11, the drive control circuit 36 has a main control section 83 having a CPU, an electromagnet control section 84 controlling the electromagnet-type securing unit 18 on the basis of a control signal from the main control section 83, and a motor control section 85 controlling the motor 48 on the basis of a control signal from the main control section 83. The electromagnet control section 84 is equipped with a field-effect transistor (FET). The FET functions as a switching element and sequentially switches on and off electrical conduction between the battery 16 and the electromagnet 18-1 to convert a direct current from the battery 16 into a pulse current consisting of a periodic pulse train. The electromagnet control section 84 changes the switching timing of the FET so as to modulate the pulse width of the pulse current on the basis of a control signal from the main control section 83, thereby controlling the average electric power to be supplied to the electromagnet-type securing unit 18. That is, the electromagnet control section 84 uses pulse width modulation (PWM) control to control the average electric power per unit of time to be supplied to the electromagnet-type securing unit 18. In this way, the electromagnet control section 84 adjusts the average electric power to be supplied to the electromagnet-type securing unit 18 to generate a magnetic force with a magnitude required for each particular situation. The motor control section 85 is also equipped with a field-effect transistor (FET) in the same way as the electromagnet control section 84. The motor control section 85 also uses pulse width modulation to control the average electric power to be supplied to the motor 48.

The drive control circuit 36 further has a DC/DC converter 86 connected to the battery 16. The DC/DC converter 86 steps down the voltage of the battery 16, i.e. 24 V, to a voltage of 5 V, which is supplied as electric power for driving the drive control circuit 36. The electromagnet switch 70 is interposed between the battery 16 and the drive control circuit 36. When the electromagnet switch 70 is off, no electric power is supplied to the drive control circuit 36, and hence the motor 48 is not driven. Between the battery 16 and the DC/DC converter 86 is provided an overdischarge prevention circuit section 87 comprising a transistor. When the voltage of the battery 16 drops below a predetermined value, the overdischarge prevention circuit section 87 breaks the circuit so that no more electric current will flow, thereby preventing deterioration of the battery 16 due to overdischarge. The drive control circuit 36 is further provided with a remaining battery capacity detection section 88 detecting the remaining capacity of the battery 16. The remaining battery capacity detection section 88 detects the remaining capacity of the battery 16 by measuring the voltage of the battery 16 and outputs an analog signal corresponding to the value of the measured voltage of the battery 16. The analog signal is converted into a digital signal by an A/D converter 90 before being sent to the main control section 83. The main control section 83 controls the electromagnet control section 84 on the basis of the received battery voltage value to adjust the electric power to be supplied to the electromagnet 18-1. It should be noted that the remaining battery capacity detection section 88 may be configured to detect the remaining capacity of the battery 16 by measuring the value of electric current from the battery 16. The drive control circuit 36 is further provided with a motor current detection section 92 for measuring the value of electric current flowing through the motor 48. The motor current detection section 92 outputs an analog signal corresponding to the measured electric current value. The analog signal is converted into a digital signal by an A/D converter 94 before being sent to the main control section 83. The main control section 83 judges the status of the motor 48 on the basis of the received motor current value and changes the electric power to be supplied to the electromagnet 18-1 or stops the motor 48 according to the judged status of the motor 48. Further, the drive control circuit 36 is provided with a motor switch status monitor circuit 96 monitoring the on/off status of the motor switch 74. In addition, the drive control circuit 36 is provided with a lateral shifting detection circuit 99 configured to stop the drive of the motor 48 when a built-in acceleration sensor detects a large change in position of the drilling machine 10.

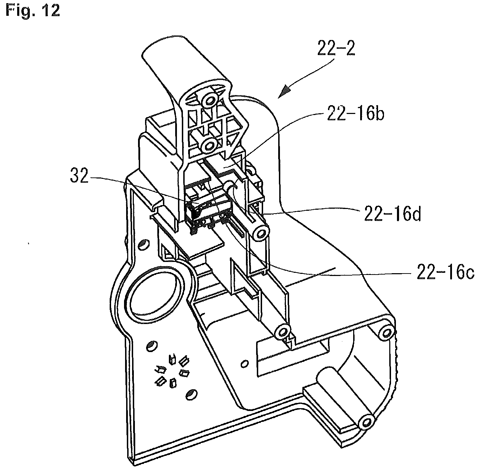

The limit switch 32 is disposed in the upper interior space 24-1 of the interior space 24, which is formed between the frame 20 and the battery housing 22. The limit switch 32 is disposed to engage a downwardly projecting switch engaging projection 30-6 provided on a part of the battery locking member 30 that is located in the battery housing 22 so that, when the battery locking member 30 moves between the retracted position and the advanced position, the limit switch 32 is turned on/off by the switch engaging projection 30-6. Specifically, when the battery locking member 30 projects toward the battery 16 to assume the advanced position, the switch engaging projection 30-6 pushes to turn on the limit switch 32, and, when the battery locking member 30 retracts from the advanced position to move toward the retracted position, where the battery locking member 30 is withdrawn into the battery housing 22, the limit switch 32 is turned off. The limit switch 32 is, as shown in Fig. 11, connected to the drive control circuit 36 to function as a position detecting device detecting that the battery locking member 30 has moved between the retracted position and the advanced position. It should be noted that the switch engaging projection 30-6 of the battery locking member 30 extends downward through an opening 22-16c (Fig. 12) provided in a portion of the left-side part 22-2 of the battery housing 22 that constitutes the bottom portion 22-16b of the battery locking member accommodating part 22-16, thus the switch engaging projection 30-6 being engageable with the limit switch 32. Further, when the battery locking member 30 is in the advanced position, the switch engaging projection 30-6 abuts against a rear end surface 22-16d of the opening 22-16c to limit the travel range of the battery locking member 30 and to prevent the battery locking member 30 from becoming dislodged from the battery locking member accommodating part 22-16.

The upper interior space 24-1 further has an LED indicator circuit 34 disposed therein in addition to the above-described limit switch 32. The LED indicator circuit 34 serves as a status indicator indicating the status of the drilling machine 10. The LED indicator circuit 34 is connected to the drive control circuit 36 to indicate a status of the drilling machine 10 on a status indicator 33 (Fig. 1) on the top of the battery housing 22 according to a signal from the drive control circuit 36. The LED indicator circuit 34 has green, yellow and red LEDs and indicates the status of the drilling machine by lighting and blinking of the LEDs, thereby informing the operator of the status of the drilling machine. It should be noted that it is also possible to use a single LED packaged as a single device capable of emitting different colors, in place of a set of discrete green, yellow and red LEDs.

When the drilling machine 10 is to be started, first, the battery 16 is loaded into the battery accommodating space 28 in the battery housing 22. To load the battery 16 into the battery accommodating space 28, the battery locking member 30 is pushed forward into the drilling machine body unit 12 so as to move to the retracted position shown in Fig. 5, thereby opening the upper side of the battery accommodating space 28. Thereafter, the battery 16 is inserted downward into the battery accommodating space 28 from the open upper side thereof. The battery 16 is moved downward while being guided by the battery guides 28-5 and thus accommodated in the battery accommodating space 28 (Fig. 9). At this time, the male connector terminals 28-7 of the drilling machine body unit 12 and the female connector terminals 16-5 of the battery 16 are connected to each other, and the battery locking portion 16-4 provided on the battery 16 engages the battery locking recess 28-8 of the intermediate wall portion 28-1 to hold the battery 16 from moving. In this way, the battery 16 is loaded in the battery accommodating space 28. Next, the battery locking member 30 is pulled out from the drilling machine body unit 12 toward the battery 16 and moved to the advanced position shown in Fig. 10. When the battery locking member 30 is in the advanced position, the inclined surface 30-1, which is provided on a side of the battery locking member 30 that faces the battery 16, abuts against the inclined battery holding member engagement surface 16-6 (Figs. 8 and 9) formed on the top front side of the battery 16, thereby holding the battery 16 in the battery accommodating space 28. Unloading of the battery 16 from the battery housing 22 is carried out by pushing the inclined surface 16-3 of the battery locking portion 16-4 to withdraw the battery locking portion 16-4 into the battery 16, and in this state, pulling the battery 16 upward from the battery accommodating space 28. In this regard, the arrangement is such that, when the battery locking member 30 is in the advanced position, the battery 16 cannot be removed by being pulled upward because the battery locking member 30 interferes with the battery 16. That is, when the battery locking member 30 is in the advanced position, a part of the battery locking member 30 is located in a travel path of the battery 16 along which the battery 16 moves when removed from the battery accommodating space 28 by being pulled upward therefrom; therefore, when the battery locking member 30 is in the advanced position, the battery 16 cannot be removed from the battery housing 22. It is necessary, in order to remove the battery 16, to push and move the battery locking member 30 into the drilling machine body unit 12 to the retracted position shown in Fig. 9, and in this state, to pull out the battery 16 upwardly. Thus, the battery locking member 30 limits the movement of the battery 16, thereby preventing accidental removal of the battery 16.

When the battery locking member 30 is pulled out toward the battery 16 and moved to the advanced position in a state where the battery 16 is correctly loaded in the battery accommodating space 28, the battery 16 is held by the battery locking member 30 so that the battery 16 cannot be removed from the battery accommodating space 28, and the limit switch 32 is turned on. When the electromagnet switch 70 is turned on in this state, the drive control circuit 36 is connected to the battery 16 and supplied with a power source to start controlling the electromagnet control section 84 so that the main control section 83 of the drive control circuit 36 supplies electric power to the electromagnet-type securing unit 18. When supplied with electric power, the electromagnet 18-1 generates a magnetic field and thus magnetically adheres to a workpiece made of a magnetic material at a drilling worksite, thereby securely holding the drilling machine 10 at the drilling worksite. At the same time, the drive control circuit 36 detects that the limit switch 32 is on, and judges that the drilling machine 10 has been started normally. Thus, the drive control circuit 36 indicates the present status of the drilling machine 10 on the status indicator 33. Specifically, the drive control circuit 36 lights up the green LED of the LED indicator circuit 34. On the other hand, when the electromagnet switch 70 is turned on with the battery locking member 30 remaining in the retracted position, the electromagnet-type securing unit 18 is driven in the same way as the above, but the drive control circuit 36 detects that the limit switch 32 is off, and judges that the drilling machine 10 has been started with the battery 16 remaining in a removable state. Accordingly, the drive control circuit 36 indicates, on the status indicator 33, a warning sign to inform the operator that the battery 16 is in a removable state. Specifically, the red LED of the LED indicator circuit 34 is blinked. If the battery locking member 30 is moved to the advanced position and thus the limit switch 32 is turned on in a state where the warning sign is being indicated, the warning state is canceled, and the drilling machine 10 is determined to be in a normally started state. Accordingly, the green LED of the LED indicator circuit 34 lights up. It should be noted that, when the battery 16 has not been lowered to the correct loading position in the battery accommodating space 28 and hence not been loaded correctly, even if the battery locking member 30 is moved toward the advanced position, the inclined surface 30-1 of the battery locking member 30 abuts against the battery holding member engagement surface 16-6 of the battery 16 on the way to the advanced position. Therefore, the battery locking member 30 cannot reach the advanced position. Accordingly, the limit switch remains off. In other words, when the operator tries to drive the drilling machine 10 in a state where the battery 16 has not been loaded correctly in the battery accommodating space 28, a warning sign is also indicated as stated above; therefore, it is possible to inform the operator that the battery 16 has not been loaded correctly.

If the electromagnet switch 70 has been turned on before the battery 16 is loaded in the battery accommodating space 28, the electromagnet-type securing unit 18 is driven at the same time as the battery 16 is loaded. At this time, if the motor switch 74 is off, the drilling machine 10 is determined to be in a normally started state, and the green LED of the LED indicator circuit 34 is lit up. If the motor switch 74 is on, the motor 48 is not driven, and on the status indicator 33, the green LED blinks to inform the operator that the motor switch 74 has been on from the beginning. If, in this state, the motor switch 74 is turned off temporarily, the green LED of the status indicator 33 is switched to light up to show that the drilling machine 10 is in a normally started state.

If the motor switch 74 is turned on when the drilling machine 10 is in a normally started state and hence the green LED of the LED indicator circuit 34 is on, the main control section 83 of the drive control circuit 36 starts to drive the motor 48 through the motor control section 85. If the motor switch 74 is turned off thereafter, the drive control circuit 36 stops the motor 48. In contrast, when the battery locking member 30 is not in the advanced position and hence the red LED is blinking to indicate the above-described warning sign on the status indicator 33, even if the motor switch 74 is turned on, the drive control circuit 36 does not drive the motor 48 but continues to indicate the warning sign. If the battery locking member 30 retracts from the advanced position when the motor 48 is being driven in the normally started state and hence the limit switch 32 turns from on to off, the drive control circuit 36 blinks the red LED of the LED indicator circuit 34 to indicate a warning sign on the status indicator 33. It should be noted that, at this time, it is possible to reduce the electric power to be supplied to the motor 48 to reduce the rotational speed of the motor 48, or alternatively, it is also possible to stop the supply of electric power to the motor 48 to stop the motor 48.

Thus, the status indicator 33, which indicates the status of the drilling machine 10, is configured to indicate some different signs according to the on/off statuses of the limit switch 32, the electromagnet switch 70 and the motor switch 74. In the drilling machine 10 of the present invention, in particular, the securing unit for securely holding the drilling machine body unit 12 is the electromagnet-type securing unit 18, which uses the electromagnet 18-1. Accordingly, if the supply of electric power to the electromagnet 18-1 is stopped and the force for securely holding the drilling machine body unit 12 is cancelled suddenly, there is a danger of causing an accident such as the fall or drop of the drilling machine 10. Therefore, a warning sign is indicated to inform the operator of danger when a state is detected in which removal of the battery 16 may occur while the electromagnet-type securing unit 18 is being driven. By indicating such a warning sign, the operator is prompted to move the battery locking member 30 to the advanced position so that removal of the battery 16 will not occur, thereby making it possible to prevent an accident such as that stated above. It should be noted that the status indicator 33 as the status indicator may indicates, in addition to the above-described warning sign, the remaining capacity of the battery 16 detected by the remaining battery capacity detection section 88, and the level of load on the motor 48 surmised from the electric current supplied to the motor 48, which is detected by the motor current detection section 92, for example.

The battery locking member 30 in this embodiment has the function of preventing removal of the battery 16 from the battery accommodating space 28, and at the same time, functions as a dustproof cover that covers, from above, a vertically extending gap between the intermediate wall portion 28-1 of the battery housing 22 and the front side 16-1 of the battery 16 to prevent the entry of machining swarf, water, etc. into the gap. The function of the battery locking member 30 as a dustproof cover makes it possible to reduce the danger of machining swarf, water, etc. entering to reach the connector terminals 16-5 and 28-7, which may cause short circuit.

It should be noted that, although in this embodiment visual indication using lighting and blinking of LEDs is employed as the status indicator of the drilling machine 10, it is also possible to employ audio indication or a combination of visual indication and audio indication. Further, although in this embodiment the battery locking member 30 is provided to slide in the front and back direction, the battery locking member 30 may be provided to be movable in other manners. For example, the battery locking member 30 may pivotally move. Although the battery locking member 30 is configured to abut against the battery 16 when the battery locking member 30 is in the advanced position, the battery locking member 30 need not abut against the battery 16 but may be positioned close to the battery 16.

### List of Reference Signs:

drilling machine 10; drilling machine body unit 12; drilling drive unit 14; battery 16; front side 16-1; guide rails 16-2; inclined surface 16-3; battery locking portion 16-4; female connector terminals 16-5; battery holding member engagement surface 16-6; opening 16-6a; electromagnet-type securing unit 18; electromagnet 18-1; frame 20; front wall portion 20-1; lower wall portion 20-2; right-side rib 20-3; left-side rib 20-4; engagement recess 20-9; right side 20-10; left side 20-11; drain groove 20-13; threaded holes 21; battery housing 22; right-side part 22-1; left-side part 22-2; engagement projecting portion 22-9; screw insertion holes 22-11; screw insertion holes 22-12; threaded holes 22-13; right side 22-14; left side 22-15; battery locking member accommodating part 22-16; shaft 23; interior space 24; upper interior space 24-1; lower interior space 24-2; grip 26; right-side grip portion 26-1; left-side grip portion 26-2; screw 27; battery loading part, battery accommodating space 28; intermediate wall portion 28-1; bottom wall portion 28-2; right-side wall portion 28-3; left-side wall portion 28-4; battery guides 28-5; guide grooves 28-6; male connector terminals 28-7; battery locking recess 28-8; upper wall portion 28-9; battery locking member 30; inclined surface 30-1; limit switch 32; status indicator 33; LED indicator circuit 34; wiring 35; drive control circuit 36; partition plate 38; right-side partition plate 38-1; left-side partition plate 38-2; seal member 39; arbor 40; drilling tool 44; speed reducer 45; motor cover 46; motor 48; side surfaces 50; vent holes 52; top surface 54; plug 56; position adjusting mechanism 58; position adjusting handle 60; dovetail grooves 62; slider 63; rack 64; pinion 65; feed handle 66; wiring 68; wiring insertion passage 69; electromagnet switch 70; wall 72; motor switch 74; wall 76; drain port 80; screws 82; main control section 83; electromagnet control section 84; motor control section 85; DC/DC converter 86; overdischarge prevention circuit section 87; remaining battery capacity detection section 88; A/D converter 90; motor current detection section 92; A/D converter 94; motor switch status monitor circuit 96; lateral shifting detection circuit 99

## Claims

1. A battery-operated drilling machine (10) comprising:
a drilling drive unit (14) having a motor (48) for rotationally driving a drilling tool (44);
a drilling machine body unit (12) having a battery loading part (28) into which a battery (16) for supplying electric power to the motor (48) is loaded, the drilling machine body unit (12) supporting the drilling drive unit (14) vertically movably to bring the drilling tool (44) toward and away from a workpiece;
a battery locking member (30) attached to the drilling machine body unit (12), the battery locking member (30) being movable between a retracted position and an advanced position relative to the battery (16) loaded in the battery loading part (28), the battery locking member (30) being configured to prevent removal of the battery (16) from the battery loading part (28) when the battery locking member (30) is in the advanced position;
an electromagnet (18-1) attached to the drilling machine body unit (12) to securely hold the drilling machine body unit (12) to the workpiece;
**characterised by**:
a drive control circuit (36) provided in the drilling machine body unit (12) and controlling drive of the motor (48) and the electromagnet (18-1);
a limit switch (32) provided in the drilling machine body unit (12) to detect a position of the battery locking member (30), the limit switch (32) connected to the drive control circuit (36);
a status indicator (33) for indicating a status of the drilling machine (10); and
an electromagnet switch (70) interposed between the battery (16) and the drive control circuit (36) so that no electric power is supplied to the drive control circuit (36) from the battery (16) when the electromagnet switch (70) is off, and electric power is supplied to the drive control circuit (36) to drive the electromagnet (18-1) when the electromagnet switch (70) is turned on;
wherein, when the limit switch (32) detects a state in which the battery locking member (30) is not in the advanced position when the battery (16) is loaded in the battery loading part (28) and electric power is supplied to the drive control circuit (36) from the battery (16) to drive the electromagnet (18-1), the drive control circuit (36) indicates, on the status indicator (33), a warning sign that indicates the state, and wherein when the battery locking member (30) is moved to the advanced position in a state where the warning sign is being indicated, the warning sign is canceled.

2. The drilling machine (10) of claim 1, wherein the drive control circuit (36) does not start the motor (48) when the status indicator (33) is indicating the warning sign.

3. The drilling machine (10) of claim 2, wherein the drive control circuit (36) stops the motor (48) when the status indicator (33) indicates the warning sign while the motor (48) is being driven.

4. The drilling machine (10) of any one of claims 1 to 3, wherein the limit switch is configured to be turned on/off when the battery locking member (30) moves between the retracted position and the advanced position, thereby detecting a position of the battery locking member (30).

5. The drilling machine (10) of any one of claims 1 to 4, wherein the status indicator (33) has a light-emitting element, so that the warning is visually indicated by a change in color or in lighting condition of the light-emitting element.

## Patentansprüche

1. Batteriebetriebene Bohrmaschine (10), umfassend:
eine Bohrantriebseinheit (14) mit einem Motor (48) zum drehenden Antreiben eines Bohrwerkzeugs (44);
eine Bohrmaschinenkörpereinheit (12) mit einem Batterieladeteil (28), in das eine Batterie (16) zum Zuführen von elektrischer Leistung zu dem Motor (48) geladen wird, wobei die Bohrmaschinenkörpereinheit (12) die Bohrantriebseinheit (14) vertikal beweglich trägt, um das Bohrwerkzeug (44) zu einem Werkstück hin und von diesem weg zu bringen;
ein Batterieverriegelungselement (30), das an der Bohrmaschinenkörpereinheit (12) angebracht ist, wobei das Batterieverriegelungselement (30) zwischen einer zurückgezogenen Position und einer vorgeschobenen Position relativ zu der Batterie (16), die in das Batterieladeteil (28) geladen ist, beweglich ist, wobei das Batterieverriegelungselement (30) konfiguriert ist, um ein Entfernen der Batterie (16) von dem Batterieladeteil (28) zu verhindern, wenn sich das Batterieverriegelungselement (30) in der vorgeschobenen Position befindet;
einen Elektromagneten (18-1), der an der Bohrmaschinenkörpereinheit (12) angebracht ist, um die Bohrmaschinenkörpereinheit (12) sicher an dem Werkstück zu halten;
**gekennzeichnet durch**:
eine Antriebssteuerschaltung (36), die in der Bohrmaschinenkörpereinheit (12) bereitgestellt ist und den Antrieb des Motors (48) und des Elektromagneten (18-1) steuert;
einen Begrenzungsschalter (32), der in der Bohrmaschinenkörpereinheit (12) bereitgestellt ist, um eine Position des Batterieverriegelungselements (30) zu erfassen, wobei der Begrenzungsschalter (32) mit der Antriebssteuerschaltung (36) verbunden ist;
einen Statusanzeiger (33) zum Anzeigen eines Status der Bohrmaschine (10); und
einen Elektromagnetschalter (70), der zwischen der Batterie (16) und der Antriebssteuerschaltung (36) angeordnet ist, so dass der Antriebssteuerschaltung (36) keine elektrische Leistung von der Batterie (16) zugeführt wird, wenn der Elektromagnetschalter (70) ausgeschaltet ist, und der Antriebssteuerschaltung (36) elektrische Leistung zugeführt wird, um den Elektromagneten (18-1) anzutreiben, wenn der Elektromagnetschalter (70) eingeschaltet ist;
wobei, wenn der Begrenzungsschalter (32) einen Zustand erfasst, in dem sich das Batterieverriegelungselement (30) nicht in der vorgeschobenen Position befindet, wenn die Batterie (16) in das Batterieladeteil (28) geladen ist, und der Antriebssteuerschaltung (36) elektrische Leistung von der Batterie (16) zugeführt wird, um den Elektromagneten (18-1) anzutreiben, die Antriebssteuerschaltung (36) auf dem Statusanzeiger (33) ein Warnzeichen anzeigt, das den Zustand anzeigt, und wobei, wenn das Batterieverriegelungselement (30) in einem Zustand, in dem das Warnzeichen angezeigt wird, in die vorgeschobene Position bewegt wird, das Warnzeichen aufgehoben wird.

2. Bohrmaschine (10) nach Anspruch 1, wobei die Antriebssteuerschaltung (36) den Motor (48) nicht startet, wenn der Statusanzeiger (33) das Warnzeichen anzeigt.

3. Bohrmaschine (10) nach Anspruch 2, wobei die Antriebssteuerschaltung (36) den Motor (48) stoppt, wenn der Statusanzeiger (33) das Warnzeichen anzeigt, während der Motor (48) angetrieben wird.

4. Bohrmaschine (10) nach einem der Ansprüche 1 bis 3, wobei der Begrenzungsschalter konfiguriert ist, um ein-/ausgeschaltet zu werden, wenn sich das Batterieverriegelungselement (30) zwischen der zurückgezogenen Position und der vorgeschobenen Position bewegt, wodurch eine Position des Batterieverriegelungselements (30) erfasst wird.

5. Bohrmaschine (10) nach einem der Ansprüche 1 bis 4, wobei der Statusanzeiger (33) ein lichtemittierendes Element aufweist, so dass die Warnung visuell durch eine Änderung der Farbe oder des Beleuchtungszustands des lichtemittierenden Elements angezeigt wird.

## Revendications

1. Machine de forage à batterie (10) comprenant :
une unité d'entraînement de forage (14) ayant un moteur (48) pour entraîner en rotation un outil de forage (44) ;
une unité de corps de machine de forage (12) ayant une partie de chargement de batterie (28) dans laquelle une batterie (16) pour fournir de l'énergie électrique au moteur (48) est chargée, l'unité de corps de machine de forage (12) supportant l'unité d'entraînement de forage (14) verticalement mobile pour amener l'outil de forage (44) vers et à distance d'une pièce à usiner ;
un élément de verrouillage de batterie (30) fixé à l'unité de corps de machine de forage (12), l'élément de verrouillage de batterie (30) étant mobile entre une position rétractée et une position avancée par rapport à la batterie (16) chargée dans la partie de chargement de batterie (28), l'élément de verrouillage de batterie (30) étant configuré pour empêcher le retrait de la batterie (16) de la partie de chargement de batterie (28) lorsque l'élément de verrouillage de batterie (30) est dans la position avancée ;
un électroaimant (18-1) fixé à l'unité de corps de machine de forage (12) pour maintenir solidement l'unité de corps de machine de forage (12) sur la pièce à usiner ; **caractérisée par** :
un circuit de commande d'entraînement (36) prévu dans l'unité de corps de machine de forage (12) et commandant l'entraînement du moteur (48) et de l'électroaimant (18-1) ;
un interrupteur de fin de course (32) prévu dans l'unité de corps de machine de forage (12) pour détecter une position de l'élément de verrouillage de batterie (30), l'interrupteur de fin de course (32) étant connecté au circuit de commande d'entraînement (36) ;
un indicateur d'état (33) pour indiquer un état de la machine de forage (10) ; et
un interrupteur d'électroaimant (70) interposé entre la batterie (16) et le circuit de commande d'entraînement (36) de sorte qu'aucune énergie électrique n'est fournie au circuit de commande d'entraînement (36) à partir de la batterie (16) lorsque l'interrupteur d'électroaimant (70) est désactivé, et de l'énergie électrique est fournie au circuit de commande d'entraînement (36) pour entraîner l'électroaimant (18-1) lorsque l'interrupteur d'électroaimant (70) est activé ;
dans laquelle, lorsque l'interrupteur de fin de course (32) détecte un état dans lequel l'élément de verrouillage de batterie (30) n'est pas dans la position avancée lorsque la batterie (16) est chargée dans la partie de chargement de batterie (28) et de l'énergie électrique est fournie au circuit de commande d'entraînement (36) à partir de la batterie (16) pour entraîner l'électroaimant (18-1), le circuit de commande d'entraînement (36) indique, sur l'indicateur d'état (33), un signe d'avertissement qui indique l'état, et dans laquelle lorsque l'élément de verrouillage de batterie (30) est déplacé vers la position avancée dans un état où le signe d'avertissement est indiqué, le signe d'avertissement est annulé.

2. Machine de forage (10) selon la revendication 1, dans laquelle le circuit de commande d'entraînement (36) ne démarre pas le moteur (48) lorsque l'indicateur d'état (33) indique le signe d'avertissement.

3. Machine de forage (10) selon la revendication 2, dans laquelle le circuit de commande d'entraînement (36) arrête le moteur (48) lorsque l'indicateur d'état (33) indique le signe d'avertissement alors que le moteur (48) est entraîné.

4. Machine de forage (10) selon l'une quelconque des revendications 1 à 3, dans laquelle l'interrupteur de fin de course est configuré pour être activé/désactivé lorsque l'élément de verrouillage de batterie (30) se déplace entre la position rétractée et la position avancée, détectant ainsi une position de l'élément de verrouillage de batterie (30).

5. Machine de forage (10) selon l'une quelconque des revendications 1 à 4, dans laquelle l'indicateur d'état (33) a un élément électroluminescent, de sorte que l'avertissement est indiqué visuellement par un changement de couleur ou d'état d'éclairage de l'élément électroluminescent.
